# EUROPÄISCHE PATENTANMELDUNG

(11) **EP 1 184 859 A1**
(43) Veröffentlichungstag der Anmeldung: **06.03.2002**
(21) Anmeldenummer: 00117690.8
(22) Anmeldetag: 17.08.2000
(51) Int. Cl.: G11B 7/26, B23K 26/08

(54) **Verfahren zur Form- und/oder Oberflächenausbildung**

(71) Anmelder: Euro Digital Disc Productions GmbH, 02826 Görlitz (DE)
(72) Erfinder: Holwerda, Denny, 7545 PG Enschede (NL)
(74) Vertreter: Stenger, Watzke & Ring Patentanwälte

(57) **Zusammenfassung**

Um ein Verfahren zur Form- und/oder Oberflächenausbildung eines optischen Datenträgers anzugeben, das bei gleichzeitig schneller Durchführung eine hohe Präzision bietet und zur Ausbildung sehr feiner Strukturen geeignet ist, das auf einfache Weise in bestehende Datenträgerherstellverfahren integrierbar ist und das zudem die Erzeugung einer Vielzahl unterschiedlicher Formen und/oder Oberflächen kostengünstig ermöglicht, wird mit der Erfindung ein Verfahren vorgeschlagen, bei dem der Datenträger in seiner Lage fixiert und mittels eines entlang einer vorgebbaren Bahn geführten Laserstrahls form- und/oder gravurgebend bearbeitet wird.

## Beschreibung

Die Erfindung betrifft ein Verfahren zur Form- und/oder Oberflächenausbildung eines optischen Datenträgers. Ferner betrifft die Erfindung eine Vorrichtung zur Durchführung des Verfahrens.

Optische Datenträger sind aus dem Stand der Technik hinlänglich bekannt. Sie werden unter anderem als Compact Discs (CDs), beispielsweise als Audio-CDs, als wiederbeschreibbare CDRs, als Photo-CDs, als Minidiscs oder dergleichen verwendet und eingesetzt. Immanent ist allen vorgenannten Datenträgern, daß sie im allgemeinen eine kreisförmige Grundform aufweisen.

Zur Schaffung andersartiger und eigentümlicher optischer Erscheinungsformen ist es aus dem Stand der Technik bekannt, von der Kreisform abweichende Formen auszubilden. Beispiel hierfür sind ovale, rechteckige oder wellenartige Formen. Zwar wird durch die Ausbildung andersartiger, von der Kreisform abweichender Formen der insgesamt auf dem Datenträger zur Verfügung stehende Speicherplatz geschmälert, doch ist die Speicherkapazität heutiger Datenträger derartig groß, daß es für eine Vielzahl von Anwendungen nicht weiter erforderlich ist, die volle Speicherkapazität umfänglich zur Verfügung zu stellen. Vielmehr kommt es darauf an, neben der Bereitstellung eines ausreichenden Speicherplatzes die Datenträgerform interessant und auffällig zu gestalten. Dabei ist darauf zu achten, daß die Verwendung auch andersartig ausgebildeter Datenträger mit herkömmlichen Abspielgeräten möglich ist. In der Konsequenz heißt dies, daß die räumliche Ausdehnung eines andersartig geformten Datenträgers nicht größer ist als diejenige eines herkömmlichen, kreisförmigen Datenträgers.

Zur Ausbildung andersartiger Datenträgerformen ist es aus dem Stand der Technik bekannt, spanabhebende Bearbeitungsverfahren, wie beispielsweise Fräsen, Sägen, Bohren oder dergleichen einzusetzen. Dabei werden ausgehend von einer kreisförmigen Grundform andersartige Datenträgerformen infolge des Abtrags ausgesuchter Materialbereich erzeugt. So kann beispielsweise eine rechteckförmige Datenträgerform dadurch ausgebildet werden, daß ausgehend von einer kreisförmigen Grundform diejenigen Materialbereiche entfernt werden, die im Vergleich mit der kreisförmigen Grundform den Materialüberstand darstellen. Durchgeführt werden derartige Bearbeitungen zumeist unter Verwendung computergesteuerter CNC-Maschinen.

Von Nachteil bei den vorbekannten Bearbeitungsverfahren ist insbesondere, daß eine phantasievolle Formgestaltung mit wirtschaftlich vertretbarem Aufwand nur eingeschränkt möglich ist. Vor allem lassen sich feine Strukturen nicht realisieren. Hinzu kommt, daß bei der spanabhebenden Bearbeitung die spanabtragenden Werkzeuge mit der Zeit verschleißen. Um Toleranzen in der Formausbildung möglichst gering zu halten, ist es daher erforderlich, die Werkzeuge einer ständigen Kontrolle zu unterziehen und gegebenenfalls auszutauschen. Zudem gilt es zu berücksichtigen, daß die während eines Bearbeitungsvorgangs durch Materialabtrag anfallenden Späne ungewollt eine Beschädigung des Datenträgers, beispielsweise durch Zerkratzen, hervorrufen können. Aus fertigungstechnischer Sicht ergibt sich zudem mit den vorbekannten Bearbeitungsverfahren der Nachteil, daß die aufwendig zu handhabenden und zu kontrollierenden Maschinen zur Durchführung der vorbekannten Bearbeitungsverfahren zumeist nicht in bestehende Bearbeitungsabläufe integrierbar sind. Vielmehr ist es in der Regel erforderlich, vom Datenträgerherstellprozeß abgesonderte Fertigungsbereiche vorzusehen, in welche die Datenträger zur Formausbildung dann eingebracht werden.

Vom Vorgenannten ausgehend liegt der Erfindung daher die **Aufgabe** zugrunde, unter Vermeidung der oben genannten Nachteile ein Verfahren zur Form- und/oder Oberflächenausbildung eines optischen Datenträgers abzugeben, das bei gleichzeitig schneller Durchführung eine hohe Präzision bietet und zur Ausbildung sehr feiner Strukturen geeignet ist, das auf einfache Weise in bestehende Datenträgerherstellverfahren integrierbar ist und das zudem die Erzeugung einer Vielzahl unterschiedlichster Formen und/oder Oberflächen kostengünstig ermöglicht. Darüber hinaus soll mit der Erfindung eine Vorrichtung zur Durchführung des Verfahrens angegeben werden.

Zur **Lösung** dieser Aufgabe wird mit der Erfindung vorgeschlagen ein Verfahren zur Form- und/oder Oberflächenausbildung eines optischen Datenträgers, bei dem der Datenträger in seiner Lage fixiert und mittels eines entlang einer vorgebbaren Bahn geführten Laserstrahls form- und/oder gravurgebend bearbeitet wird.

Kerngedanke der Erfindung besteht mithin in der Laserbearbeitung anstelle der vorbekannten Spanbearbeitung. Hierdurch werden eine Reihe von Vorteile erzielt. Zum einen kann die Form- und/oder Oberflächenausbildung mittels Laserstrahl sehr viel präziser und schneller durchgeführt werden. Darüber hinaus ist die Ausbildung auch feinster Strukturen möglich, die mit herkömmlichen Bearbeitungsverfahren nicht herstellbar sind. Ein weiterer wesentlicher Vorteil der Laserbearbeitung ist durch die Möglichkeit der gravurgebenden Oberflächenausbildung gegeben. Diese Anwendungsalternative des Verfahrens ermöglicht es, die Oberfläche des Datenträgers zu verzieren und mit Schriftzeichen oder sonstigen Abbildungen zu versehen. Eine derartige Verfahrensalternative kann durch die vorbekannten Bearbeitungsverfahren nicht realisiert werden. Insofern eröffnet das erfindungsgemäße Verfahren erstmals die Möglichkeit, nicht nur die Formausbildung des Datenträgers zu gestalten, sondern auch die Oberfläche des Datenträgers bearbeiten und beispielsweise mit einer Gravur versehen zu können.

Zur Form- und/oder Oberflächenausbildung eines optischen Datenträgers ist gemäß erfindungsgemäßem Verfahren vorgesehen, daß der Datenträger zunächst in seiner Lage fixiert wird. Dies ist erforderlich, um eine präzise und reporduzierbare Form- und/oder Oberflächenausbildung zu gewährleisten. Im Anschluß an die Fixierung wird der Datenträger mittels eines Laserstrahls form- und/oder gravurgebend bearbeitet, wozu der Laserstrahl entlang einer vorgebbaren Bahn geführt wird. Hierzu kann vorgesehen sein, daß die vom Laserstrahl abzufahrende Bahn computergestützt berechnet und die Ergebnisse einer Laserstrahl-Führungseinheit zur Steuerung des Lasers in Form entsprechender Datenpunkte zur Verfügung gestellt werden. Auf einfache Weise kann so eine x-beliebige Form- und/oder Oberflächenausbildung wunschgemäß ausgewählt und zur Festlegung einer entsprechenden Führungsbahn in Bahnpunkte umgerechnet werden, so daß der Laser präzisionsgenau unter Einhaltung engster Toleranzen dieser vorgegebenen Bahn folgend die vorgegebene Form- und/oder Oberflächenausbildung realisiert.

Das erfindungsgemäße Verfahren weist zudem den Vorteil auf, daß eine Bearbeitung des Datenträgers sowohl vor, als auch nach einem Aufbringen der Speicherdaten möglich ist, da zum einen eine Nachbearbeitung im Anschluß an eine Laserstrahlbearbeitung nicht erforderlich ist und da zum anderen bei der Durchführung des Verfahrens keine Materialabfälle in Form von Spänen entstehen, die eine ungewollte Beschädigung des Datenträgers hervorrufen könnten. Der Datenträger läßt sich daher in vorteilhafter Weise gebrauchsfertig herstellen, bevor er unter Einsatz des erfindungsgemäßen Verfahrens durch Form- und/oder Oberflächenausbildung fertig bearbeitet wird.

Ein weiterer Vorteil des erfindungsgemäßen Verfahrens besteht in der Möglichkeit, dieses in bestehende Arbeitsprozesse auf einfache Weise zu integrieren. So können dem Datenträgerherstellprozeß entstammende Datenträger unmittelbar entnommen und zur Form- und/oder Oberflächenausbildung gemäß des erfindungsgemäßen Verfahrens in dafür vorgesehene Vorrichtungen eingebracht werden, die der Herstellprozeßlinie direkt nachgeschaltet sein können. Zusätzliche Handhabungsschritte sind nicht erforderlich.

Gemäß einem Merkmal der Erfindung ist vorgesehen, daß die Formausbildung mittels materialtrennender Bearbeitung durchgeführt wird. Hierbei ist unter materialtrennender Bearbeitung insbesondere der Zuschnitt zu verstehen. Dabei ist gemäß einem Merkmal der Erfindung vorgesehen ist, daß der Laserstrahl zur Formausbildung entlang der durch die spätere Kontur des Datenträgers bestimmten Bahn geführt und der Formrohling auf diese Weise zugeschnitten wird. Diese Art der Formausbildung bietet insbesonderen Vorteil, daß eine Nachbearbeitung nicht erforderlich ist. Auch ermöglicht diese Art des Zuschnitts die Bearbeitung gebrauchsfertiger Datenträger, d.h. solche Datenträger, die bereits eine Informationsstruktur aufweisen und darüber hinaus gegebenenfalls mit einem Drucklabel versehen sind. Der Phantasie der Formgebung sind dabei in vorteilhafter Weise keine Grenzen gesetzt.

Gemäß einem weiteren Merkmal der Erfindung wird die Oberflächenausbildung mittels materialabtragender Bearbeitung durchgeführt, wobei hierunter insbesondere die Oberflächengravur zu verstehen ist. Auch hier sind in der Phantasie keine Grenzen gesetzt und so können die Oberfläche des Datenträgers nach Art einer Gravur Schriftzüge, Abbildungen oder dergleichen eingebracht werden. Dabei kann die gravurgebende Ausbildung der Oberfläche entweder alternativ oder in Kombination mit einem Drucklabel eingesetzt werden. Gemäß einem vorteilhaften Vorschlag der Erfindung erfolgt die Oberflächenausbildung dadurch, daß der Laserstrahl entlang der durch die spätere Gravurkontur bestimmten Bahn geführt und hinsichtlich Konturbreite und Konturtiefe bedarfsweise eingestellt wird. Dies eröffnet die Möglichkeit, nicht nur einfache, sondern auch komplexe Strukturen nachzubilden und zahlreiche Variationsmöglichkeiten zur Gestaltung der Oberfläche bereitzustellen. Insbesondere wird hier durch die Möglichkeit der Personalisierung geschaffen. Zum einen ist erstmals möglich, CD's mit eindeutigen Zeichen zur Identifizierung und Kennzeichnung zu versehen. So können beispielsweise mit dem erfindungsgemäßen Verfahren Kennziffern in die Oberfläche der CD eingebracht werden, die es erlauben, eine bestimmte CD von anderen CD's der gleichen Charge zu unterscheiden. Beispielhaft sei hier die Kodierung mittels Zahlencode genannt. Zum zweiten bietet die Personalisierung die Möglichkeit, CD's mit benutzerindividuellen Informationen zu versehen. So kann beispielsweise eine als Visitenkarte ausgebildete CD inhaberspezifische Informationen, wie beispielsweise Name, Adresse oder Telefonnummer, aufweisen. Anders als bei einem herkömmlichen Label sind die nach dem erfindungsgemäßen Verfahren aufgebrachten Informationen untrennbar mit der CD verbunden, wodurch in vorteilhafter Weise sichergestellt wird, daß auch eine nicht bedarfsgerechte Behandlung einer CD nicht dazu führt, das mittels Gravur eingebrachte Informationen ungewollt entfernt werden. Durch diese Art der Personalisierung wird es erstmals möglich, bei der CD-Herstellung benutzerindividuelle Information durch Gravur auf der Oberfläche der CD vorzusehen, so daß diese hier durch unverwechselbar und einzigartig wird.

Gemäß einem weiteren Merkmal der Erfindung wird die Bearbeitung des Datenträgers als Folge der Kombination einer geführten Bewegung des Datenträgers selbst sowie der Führung des Laserstrahls durchgeführt. Diese Maßnahmen ermöglichen vorteilhafter Weise die Ausbildung auch sehr komplexer Strukturen. Zudem kann die Bearbeitungszeit bei einer Kombination von Datenträgerbewegung und Laserstrahlführung verringert werden, was eine Taktzeiterhöhung im Herstellprozeß erlaubt. Mit Vorteil wird in diesem Zusammenhang vorgeschlagen, daß die geführte Bewegung des Datenträgers eine Drehbewegung, eine parallel zur Datenträgerebene verlaufende Translationsbewegung oder eine Überlagerung aus Dreh- und Translationsbewegung ist.

Gemäß einem weiteren Merkmal der Erfindung wird die Bearbeitung vollautomatisch durchgeführt. Dies bedeutet, daß die aus dem Herstellungsprozeß stammenden Datenträger ohne Zwischenschaltung eines manuell auszuführenden Arbeitsschrittes direkt zur Form- und/oder Oberflächenbearbeitung in dafür vorgesehen Vorrichtungen weitergeleitet werden. Die vorgesehen Ausbildung von Form und Oberfläche erfolgt sodann computergestützt und gleichfalls ohne Zwischenschaltung manueller Arbeitsschritte. Mit Beendigung des erfindungsgemäßen Verfahrens ist gleichsam das Datenträgerherstellverfahren insgesamt abgeschlossen und es bedarf keiner weiteren Nachbearbeitung.

Hinsichtlich einer Vorrichtung zur Durchführung des erfindungsgemäßen Verfahrens wird mit der Erfindung eine Vorrichtung vorgeschlagen, die durch eine Datenträgeraufnahme, eine Laserstrahleinrichtung sowie Regelungseinheit gekennzeichnet ist. Die Datenträgeraufnahme dient dabei der Aufnahme und Fixierung des zu bearbeitenden Datenträgers. Dabei kann die Datenträgeraufnahme derart ausgestaltet sein, daß sie eine Drehbewegung, eine Translationsbewegung oder eine aus Dreh- und Translationsbewegung kombinierte Bewegung des Datenträgers zuläßt. Die Laserstrahleinrichtung dient der Erzeugung und Ausrichtung des Laserstrahls, der gemäß einer vorgegebenen Bahn über den zu bearbeitenden Datenträger geführt wird. Im Ergebnis kann so eine Form- und/oder Oberflächenausbildung erzielt werden. Zur Koordinierung der Datenträgerbewegung als auch der Führung des Laserstrahls sowie gleichfalls zur Überprüfung der durchgeführten Bearbeitung und einer sich daraus eventuell ergebenden Nachjustierung verfügt die Vorrichtung zudem über eine Regelungseinheit.

Die Regelungseinheit ihrerseits weist gemäß einem weiteren Merkmal der Erfindung eine Meßeinrichtung auf, welche die Form- und/oder Oberflächenausbildung des Datenträgers erfaßt. Als Meßeinrichtung eignen sich hier insbesondere optische Sensoren, alternativ können aber auch anderen aus dem Stand der Technik an sich bekannte Sensoren oder Detektoren eingesetzt werden. Entscheidend ist lediglich, daß die zur Beurteilung der Form- und/oder Oberflächenausbildung wesentlichen Merkmale von der Meßeinrichtung erfaßt werden. Derlei Merkmale sind beispielsweise Konturabweichungen zur vorgegebenen Bahn, Beschädigungen der Datenträgeroberfläche sowie optische Verfärbungen.

Gemäß einem weiteren Merkmal der Erfindung ist vorgesehen, daß die Regelungseinheit des weiteren eine Vergleichsschaltung aufweist, die das von der Meßeinrichtung erfaßte Signal mit einem Referenzwert vergleicht und bei Gleichheit die Bearbeitung beendet. Mit dieser Art der Ausgestaltung werden insbesondere zwei Vorteile erzielt. Zum einen wird eine Qualitätskontrolle ermöglicht, da die Regelungseinheit derart ausgebildet sein kann, daß eine Bearbeitung sowohl der Form als auch der Oberfläche des Datenträgers erst dann endet, wenn sie vorgegebenen Referenzgrößen genügt. Auf diese Weise wird eine immer gleichbleibend hohe Qualität erreicht. Zum anderen kann gleichfalls sichergestellt werden, daß ein fehlerhaft erstelltes Produkt augesondert wird und nicht weiter im Herstellungsprozeß verbleibt. Wird nämlich beispielsweise mit Überschreitung einer vorgebbaren Bearbeitungszeit eine Gleichheit zwischen gemessenen Istgrößen und den vorgegebenen Referenzgrößen nicht erreicht, so ist dies gleichzusetzen damit, daß die Bearbeitung des Datenträgers fehlerhaft ist. In einem solchen Fall kann sodann sofort die Bearbeitung eingestellt werden.

Gemäß einem weiteren Merkmal der Erfindung ist die Intensität des Laserstrahls stufenlos einstellbar. Hierdurch wird erreicht, daß ein und derselbe Laserstrahl sowohl zur Form- als auch zur Oberflächenbehandlung eingesetzt werden kann. So kann die Intensität des Laserstrahls danach eingestellt werden, ob dieser für eine materialtrennende oder eine materialabtragende Bearbeitung eingesetzt werden soll. Der Einstellung der Intensität kann dabei derart schnell erfolgen, daß ein und derselbe Laserstrahl zunächst eine materialtrennende Bearbeitung vornimmt und im Anschluß daran unter Verstellung der Intensität eine materialabtragende Bearbeitung durchführt.

Weitere Vorteile und Merkmale der Erfindung begeben sich aus der nachfolgenden Beschreibung anhand der Zeichnungen. Dabei zeigen:
- Figur 1: in einer schematischen Draufsicht eine Audio-CD in Kreisform;
- Figur 2: in einer schematischen Draufsicht eine Audio-CD in Nicht-Kreisform;
- Figur 3: in schematischer Draufsicht eine Audio-CD in Kreisform mit einem gegenüber Figur 1 verkleinertem Durchmesser;
- Figur 4: in einer schematischen Draufsicht eine Audio-CD in Rechteckform;
- Figur 5: in einer schematischen Draufsicht eine Audio-CD mit Oberflächengravur und
- Figur 6: in einer schematischen Draufsicht eine Audio-CD in Rechteckform mit Oberflächengravur.

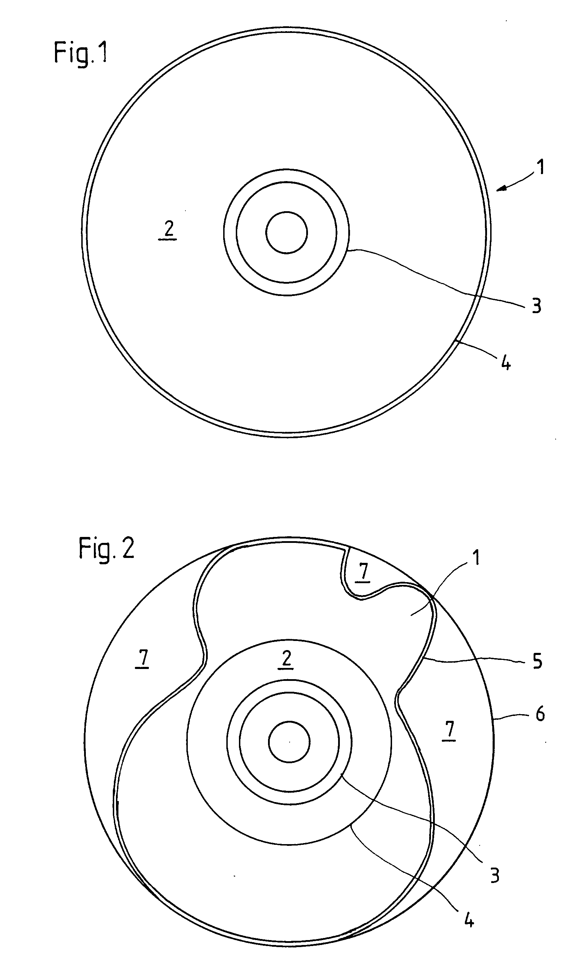

Dargestellt ist in Figur 1 eine herkömmliche Audio-CD 1. Diese weist eine kreisförmige Grundform auf. Der insgesamt zur Verfügung stehende Bereich der CD, der zu Speicherungszwecken genutzt werden kann, ist mit 2 bezeichnet. Begrenzt wird der Speicherbereich 2 durch die mit 3 und 4 bezeichneten Beschichtungskanten.

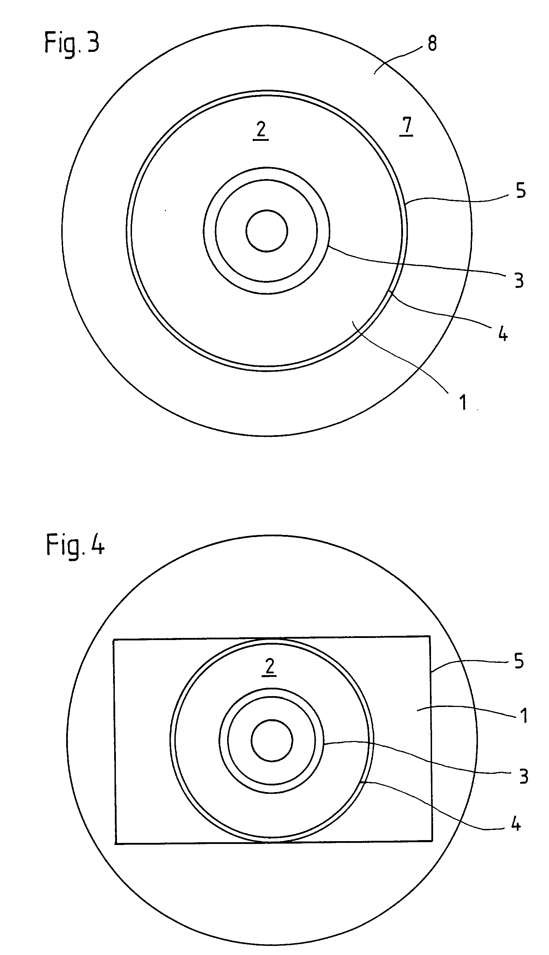

Figur 2 zeigt eine Audio-CD 1, die eine von der Kreisform abweichende Körperkontur 5 aufweist. Beispielhaft ist hier der Korpus einer Gitarre nachgebildet. Der insgesamt zur Verfügung stehende Speicherbereich 2 ist durch die Beschichtungskanten 3 und 4 eingegrenzt und im Vergleich zum Ausführungsbeispiel nach Figur 1 deutlich verringert. Um ein Abspielen der Audio-CD 1 in herkömmlichen Abspielgeräten zu gewährleisten, überragt die Körperkontur 5 nicht diejenige Körperkontur 6 einer herkömmlichen, kreisförmigen Audio-CD. Zur Ausbildung der Gitarrenkorpus förmigen Körperkontur 5 wird ausgehend von einem Formrohling mit kreisförmiger Körperkontur 6 ein Laserstrahl entlang der durch die später Kontur 5 bestimmten Bahn geführt, wodurch die im Vergleich zum Formrohling überzähligen Materialbereich 7 abgetrennt werden.

Figur 3 zeigt eine Audio-CD 1 mit einem gegenüber der in Figur 1 dargestellten Audio-CD 1 verkleinerten Kreisdurchmesser. Der insgesamt zur Verfügung stehende Speicherplatz 2 ist dementsprechend verkleinert. Die kreisförmige Körperkontur 5 der Audio-CD 1 kann gleichfalls unter Anwendung des erfindungsgemäßen Verfahrens ausgebildet werden, wobei als überzähliger Materialbereich 7 ein Materialring 8 übrigbleibt.

Figur 4 zeigt eine Audio-CD 1 in rechteckförmiger Ausgestaltung. Eine derartig Formgestaltung bietet sich beispielsweise für die Erstellung von Visitenkarten an. Der nach einem Zuschnitt der Körperkontur 5 übrig bleibende Speicherbereich 2 weist dabei je nach Größe der Visitenkarte eine Speicherkapazität von ca. 12 Megabyte bis 25 Megabyte auf.

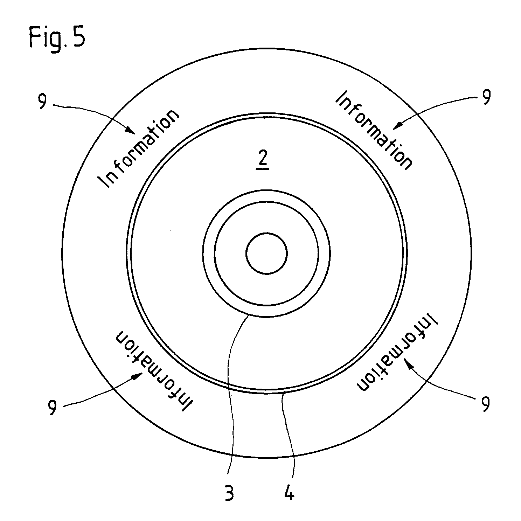

Figur 5 zeigt eine Audio-CD 1 gemäß Figur 1 mit kreisförmiger Grundform. Die Oberfläche der hier dargestellten CD 1 ist mit Information 9 versehen, die infolge einer gravurgebenden Laserbehandlung auf die Oberfläche der CD 1 aufgetragen sind. Der insgesamt zur Verfügung stehende Speicherbereich ist mit 2 bezeichnet und durch die Beschichtungskanten 3 und 4 begrenzt.

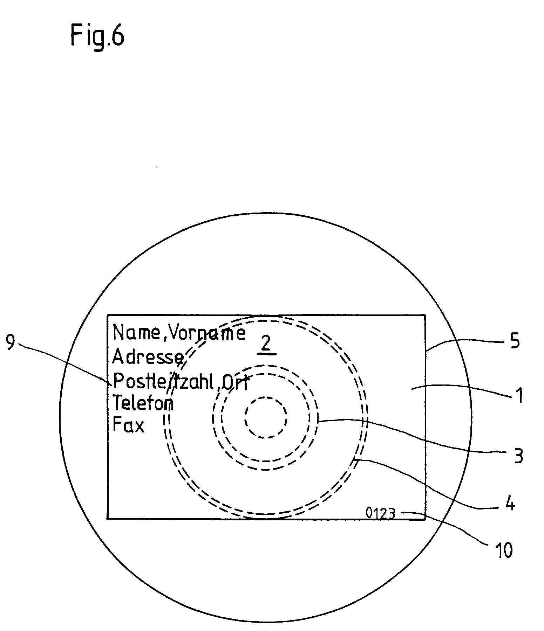

Figur 6 zeigt eine Audio-CD 1 gemäß Figur 4 in einer Draufsicht von oben. Die Audio-CD 1 weist eine rechteckförmige Ausgestaltung auf und ist in Form einer Visitenkarte ausgebildet. Auf der Vorderseite dieser Audio-CD 1 sind benutzerindividuelle Informationen 9 aufgebracht, beispielsweise Name, Adresse, Postleitzahl, Ort, Telefon und Telefax. Diese Informationen werden unter Verwendung des erfindungsgemäßen Verfahrens gravurgebend durch Laserbehandlung auf die Oberfläche der CD 1 aufgetragen. Auf diese Weise wird eine Personalisierung erreicht, die es jedem Dritten ermöglicht, bei Betrachtung der Vorderseite der CD zu erkennen, wem diese als Visitenkarte ausgebildete CD zuzuordnen ist. Neben einer individualisierenden Personalisierung kann zudem mittels des erfindungsgemäßen Verfahrens eine eindeutige Kennzeichnung einer jeden CD vorgenommen werden. Beispielsweise ist dies in der Figur 6 durch die Kennzeichnung 10 zum Ausdruck gebracht. Hierbei handelt es sich um ein Nummerncode, der es erlaubt eine ganz bestimmte CD zu identifizieren. Im einfachsten Fall kann dies biespielsweise dazu genutzt werden, jede hergestellte CD mit einem Nummercode zu versehen, um so im nachhin festhalten zu können, welche CD wann zu welchem Termin gefertigt wurde. Auch könnte beispielsweise nachgehalten werden, wann eine CD herausgegeben wurde.

Das erfindungsgemäße Verfahren ermöglicht mithin, nicht nur von der Kreisform abweichende äußere Ausgestaltungsformen einer CD auszubilden, auch wird mit dem erfindungsgemäßen Verfahren die Möglichkeit geschaffen, Informationen, insbesondere personalisierende Informationen, auf einer CD gravurgebend aufzubringen. Der besondere Vorteil der CD-Gravur liegt dabei zum einen darin, daß neben einfachen auch sehr komplexe Strukturen nachgebildet werden können und zahlreiche Variationsmöglichkeiten zur Verfügung stehen, zum anderen werden diese Informationen nicht trennbar auf die CD aufgebracht, so daß ein ungewolltes Trennen von aufgebrachter Information und CD selbst, wie dies beispielsweise bei dem Aufbringen von informationen durch ein CD-Etikett vorkommen kann, wirkungsvoll vermieden wird.

### Bezugszeichenliste

- 1: Audio-CD
- 2: Speicherbereich
- 3: Beschichtungskante
- 4: Beschichtungskante
- 5: Körperkontur
- 6: Körperkontur
- 7: Materialbereich
- 8: Materialring
- 9: Information
- 10: Kennzeichnung

## Patentansprüche

1. Verfahren zur Form- und/oder Oberflächenausbildung eines optischen Datenträgers, bei dem der Datenträger in seiner Lage fixiert und mittels eines entlang einer vorgebbaren Bahn geführten Laserstrahls form- und/oder gravurgebend bearbeitet wird.

2. Verfahren nach Anspruch 1, **dadurch gekennzeichnet, daß** die Formausbildung mittels materialtrennender Bearbeitung durchgeführt wird.

3. Verfahren nach den Ansprüchen 1 und 2, **dadurch gekennzeichnet, daß** der Laserstrahl zur Formausbildung entlang der durch die spätere Kontur des Datenträgers bestimmten Bahn geführt und der Formrohling zugeschnitten wird.

4. Verfahren nach Anspruch 1, **dadurch gekennzeichnet, daß** die Oberflächenausbildung mittels materialabtragende Bearbeitung durchgeführt wird.

5. Verfahren nach den Ansprüche 1 und 4, **dadurch gekennzeichnet, daß** der Laserstahl zur Oberflächenausbildung entlang der durch die spätere Gravurkontur bestimmten Bahn geführt und hinsichtlich Konturbreite und Konturtiefe bedarfsweise eingestellt wird.

6. Verfahren nach einem der Ansprüche 1 bis 5, **dadurch gekennzeichnet, daß** die Bearbeitung als Folge der Kombination einer geführten Bewegung des Datenträgers und der Führung des Laserstrahls durchgeführt wird.

7. Verfahren nach einem der vorhergehenden Ansprüche, **dadurch gekennzeichnet, daß** die geführte Bewegung des Datenträgers eine Drehbewegung, eine parallel zur Datenträgerebene verlaufende Translationsbewegung oder eine Überlagerung aus Dreh- und Translationsbewegung ist.

8. Verfahren nach einem der vorhergehenden Ansprüche, **dadurch gekennzeichnet, daß** die Bearbeitung vollautomatisch durchgeführt wird.

9. Verfahren nach einem der vorhergehenden Ansprüche, **dadurch gekennzeichnet, daß** die Bearbeitung zeitgesteuert durchgeführt wird.

10. Verfahren nach einem der vorhergehenden Ansprüche, **dadurch gekennzeichnet, daß** die Bearbeitung ausgehend von einem kreisförmigen Datenträger-Formrohling durchgeführt wird.

11. Verfahren nach einem der vorhergehenden Ansprüche, **dadurch gekennzeichnet, daß** ein Gaslaser eingesetzt wird.

12. Verfahren nach Anspruch 11, **dadurch gekennzeichnet, daß** der Gaslaser ein Helium-Neon-Laser ist.

13. Verfahren nach einem der vorhergehenden Ansprüche, **dadurch gekennzeichnet, daß** ein Feststofflaser eingesetzt wird.

14. Vorrichtung zur Durchführung des Verfahrens nach einem der Ansprüche 1 bis 13, **gekennzeichnet durch** eine Datenträgeraufnahme, eine Laserstrahleinrichtung sowie eine Regelungseinheit.

15. Vorrichtung nach Anspruch 14, **dadurch gekennzeichnet, daß** die Regelungseinheit eine Meßeinrichtung aufweist, welche die Form- und/oder Oberflächenausbildung des Datenträgers erfaßt.

16. Vorrichtung nach den Ansprüchen 15 und 16, **dadurch gekennzeichnet, daß** die Regelungseinheit eine Vergleichsschaltung aufweist, die das von der Meßeinrichtung erfaßte Signal mit einem Referenzwert vergleicht und bei Gleichheit die Bearbeitung beendet.

17. Vorrichtung nach einem der Ansprüche 14 bis 16, **dadurch gekennzeichnet, daß** die Intensität des Lasers stufenlos einstellbar ist.
